# EUROPEAN PATENT SPECIFICATION

(11) **EP 0 621 220 B1**
(45) Date of publication and mention of the grant of the patent: **01.10.1997**
(21) Application number: 94106256.4
(22) Date of filing: 21.04.1994
(51) Int. Cl.: B65G 49/06

(54) **A glass-sheet loading and tipping machine for taking glass sheets in succession from a pack of superposed sheets**
Lade- und Kippmaschine zum Abnehmen von Glasscheiben nacheinander von einem Stapel
Machine de chargement et basculement pour dépiler successivement des plaques de verre

(30) Priority: 23.04.1993 IT TO930282
(43) Date of publication of application: 26.10.1994
(73) Proprietor: BOTTERO S.p.A., I-12010 Roata Canale (Cuneo) (IT)
(72) Inventor: Aimar, Giacomo, I-12010 Cervasca (IT); Bertolino, Valerio, I-12040 Morozzo (IT)
(74) Representative: Bongiovanni, Guido

(56) References cited:
- WO-A-82/00628
- DE-A- 1 596 591
- DE-A- 2 006 461
- DE-A- 2 357 118
- DE-A- 3 336 937

## Description

The present invention relates to a loading and tipping machine for glass sheets adapted to take glass sheets in succession from a pack of superposed sheets disposed on a bed and to transfer and tip each of the sheets onto a substantially horizontal support structure.

A machine of this type comprises essentially at least one frame which is pivotable about a horizontal axis parallel to the sheets in the said pack and provided with suction elements adapted to be brought into contact with the surface of the sheets. Moreover this frame is fixed to the support structure at least by an extensible rod having first and second ends pivotally connected to the support structure and to the pivotable frame respectively, the extensible rod further including a hydraulic cylinder adapted to vary the length of the rod itself to move the pivotable frame from a first position, in which it is substantially vertical and the suction elements are in contact with the said surface of one of the sheets, to a second position in which the frame deposits the glass sheet on the first said support structure.

In known machines of this type (see DE-A-2 357 118), the pivotable frame is normally hinged to a carriage movable transversely on a framework of the machine in a direction perpendicular to the pivot axis of the frame itself so as to enable it to be moved towards and away from the pack of sheets.

Known loading and tipping machines of the type described briefly above have several disadvantages.

First of all, with such machines, during the step in which each sheet is taken from the pack of sheets, problems may arise as a result of adherence between the sheet subsequent to that which is to be taken and the sheet being taken; consequently, in several cases, either two sheets are taken simultaneously or the sheets underlying that which is to be taken are displaced undesirably. To avoid these problems, machines have also been proposed in which the suction elements are carried by a plate which is connected to the first pivotable frame defined above by means of a complex of connecting rods so as to allow the plate itself to pivot relative to the frame. At least one hydraulic cylinder is interposed between the first and the second to cause the pivoting of the plate relative to the frame at the same time as the frame is pivoted relative to the framework of the machine; thus the two pivotal movements of the frame relative to the framework and of the plate relative to the frame result in a movement of the plate relative to the pack of glass sheets which is not parallel to the sheets itself and whereby the distance between the lower part of this plate and the pack of sheets becomes greater than the distance between the upper part of the plate and the pack.

In other structional solutions, the pivotable frame has associated generator means for generating air jets directed against suitable zones of the surface of the glass sheet which is to be taken up so as to facilitate its detachment from the underlying sheet.

Machines of the type described briefly have complicted structures and are thus expensive and not very reliable.

The object of the present invention is to provide a machine of a type described briefly and in which the problems reported above are eliminated and which has a very simple and reliable structure.

This object is achieved by means of a glass-sheet loading and tipping machine for taking sheets of glass in succession from a pack of superposed sheets disposed in substantially vertical planes on a bed and for transferring and tipping each of the sheets over onto a substantially horizontal support structure, the machine including essentially at least one frame which is pivotable about a horizontal axis parallel to the sheets in the pack and which has suction elements adapted to be brought into contact with a surface of the sheets, the frame being fixed to the support structure by at least one extensible rod having a first end and a second end pivotally connected to the structure and to the pivotable frame respectively and the extensible rod including a first hydraulic cylinder for varying the length of the rod itself to bring the pivotable frame from a first position in which it is substantially vertical and in which the suction elements are in contact with the said surface of the sheets, to a second position in which the frame is substantially parallel to the substantially horizontal support structure, characterised in that it includes means for displacing to the horizontal axis of the pivotable frame substantially upwardly and inwardly of the support structure so that, during this displacement, with the length of the rod being kept constant, the frame moves away from the pack while not being kept parallel to the pack itself so that the distance between the lower part of the frame and the pack of sheets becomes greater than the distance between the upper part of the frame and the pack of sheets.

For a better understanding of the structure of the machine of the invention a more detailed description will now be given by way of example with reference to the appended drawings in which:
Figure 1 is a front view of the machine of the invention,
Figure 2 is a plan view thereof;
Figure 3 shows an enlarged section of the machine taken on the line III-III of Figure 2;
Figures 4, 5, 6 and 7 are schematic front views of the machine of the invention in different operative positions;
Figure 8 is a plan view of a different embodiment of the machine of the invention.

The glass-sheet loading and tipping machine of the invention, indicated 1, is adapted to take glass sheets 2 in succession from a pack of sheets 3 in which they are superposed and disposed in substantially vertical planes on a bed 4. The machine of the invention includes a substantially horizontal support structure 5 which is adapted to form a support platform for each of the sheets 2 which is transferred from the pack 3; this sheet is then advanced with the use of suitable conveyors onto other apparatus, such as a cutting and/or engraving table.

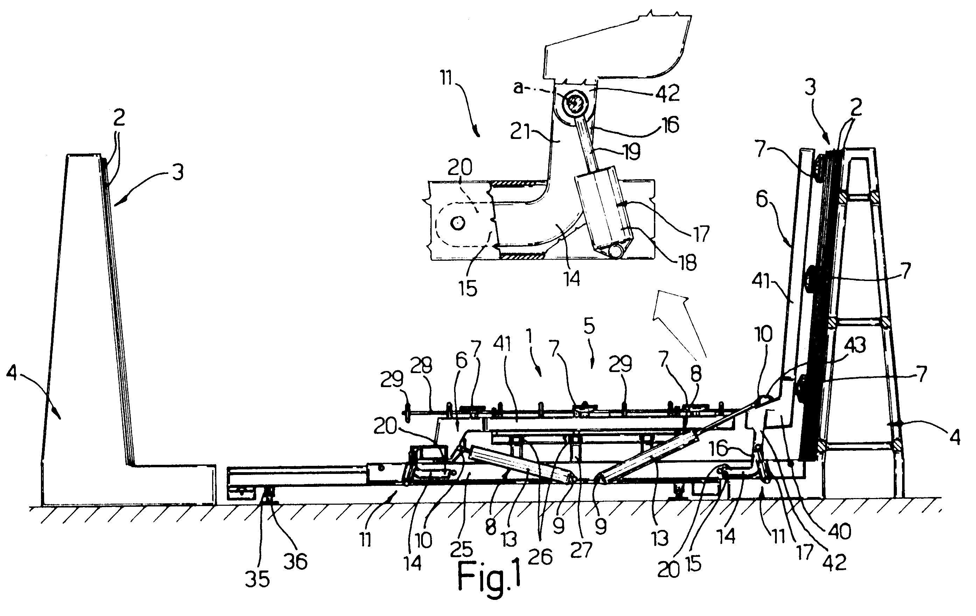

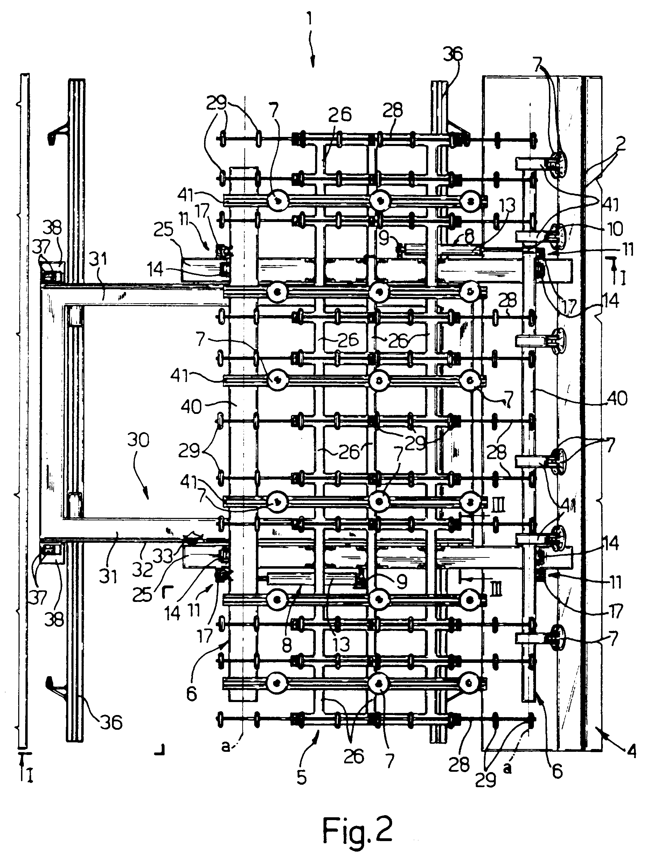

The machine of the invention comprises essentially at least one pivotable frame 6 which can pivot about a horizontal axis which is indicated a and which is parallel to the sheet 2; in the embodiment shown in Figures 1 and 2, the machine includes two pivotable frames 6, each of which is disposed on one side of the support structure 5. Each frame has suction elements 7 adapted to be brought into contact with a surface of a sheet 2. The said frame is fixed to the support structure 5 at least by means of an extensible rod 8 having a first end 9 pivotally connected to the support structure and a second end 10 pivotally connected to a point on the pivotable frame 6. Each extensible rod 8 includes an hydraulic cylinder 13 for varying the length of the rod itself to move the pivotable frame 6 from a first position (in which the frame is shown on the right-hand side in Figure 1) in which it is substantially vertical to a second position (in which the frame is shown on the left-hand side in Figure 1) in which it is substantially horizontal and parallel to the support structure 5.

On the basis of the invention, the machine includes means indicated 11 for displacing the said horizontal axis about which the frame 6 pivots in a direction substantially upwardly and inwardly of the support structure 5 so that, during this movement, with the length of the rod 8 being kept constant, the frame 6 moves away from the pack of sheets 3 but is not maintained parallel to the pack, in particular, as will become clearer from the description which follows, these means displacing the frame 6 in such a manner that the distance between the lower part thereof and the pack of sheets 3 is greater than the distance between the upper part of the frame itself in the pack.

The means 11 for displacing the horizontal axis defined above upwardly and inwardly of the support structure 5 include at least one lever 14 which is pivotable in a vertical plane; in the embodiment illustrated, there are two of these levers. Each of these has one end 15 pivoted on the support structure 5 and the other end 16 pivoted on the said horizontal axis a.

Each pivotable lever 14 is actuated by an hydraulic cylinder 17 the casing 18 of which is pivoted on the support structure 5 and the shaft 19 of which is pivotally connected to the said axis.

Conveniently, as shown in the drawings, the pivotable lever 14 comprises essentially two substantially orthogonal arms 20 and 21.

The machine also includes actuator means (not shown) for controlling the hydraulic cylinders 13 and 17 to carry out a succession of steps which will be described below.

The support structure 5 includes a pair of cross-members 25 (Figures 1 and 2) the axes of which are substantially perpendicular to the horizontal axis a defined above about which each frame 6 pivots; these cross-members are interconnected by a plurality of longitudinal members 26(Figure 2) substantially perpendicular to the cross-members themselves; each of these has uprights 27 (Figure 1) for supporting a plurality of shafts 28 rotatable on the uprights themselves and to which are fixed rollers 29 adapted to constitute supports for the sheets 2 when they are transferred to the support structure 5.

The end 15 of each pivotable lever 14 and the end 9 of each rod 8 are pivotably connected to a cross-member 25 as is clearly seen in Figures 1 and 2.

The framework 5 further includes a frame 30 (Figure 2) which is movable relative to the beds 4 parallel to the said horizonal axis of pivoting of each frame 6; the frame 30 includes at least one pair of further cross-members 31 parallel to the cross-members 25 of the first pair and located in such a manner that a cross-member 25 of the first pair is substantially alongside and outside the corresponding cross-member 31 of the second pair.

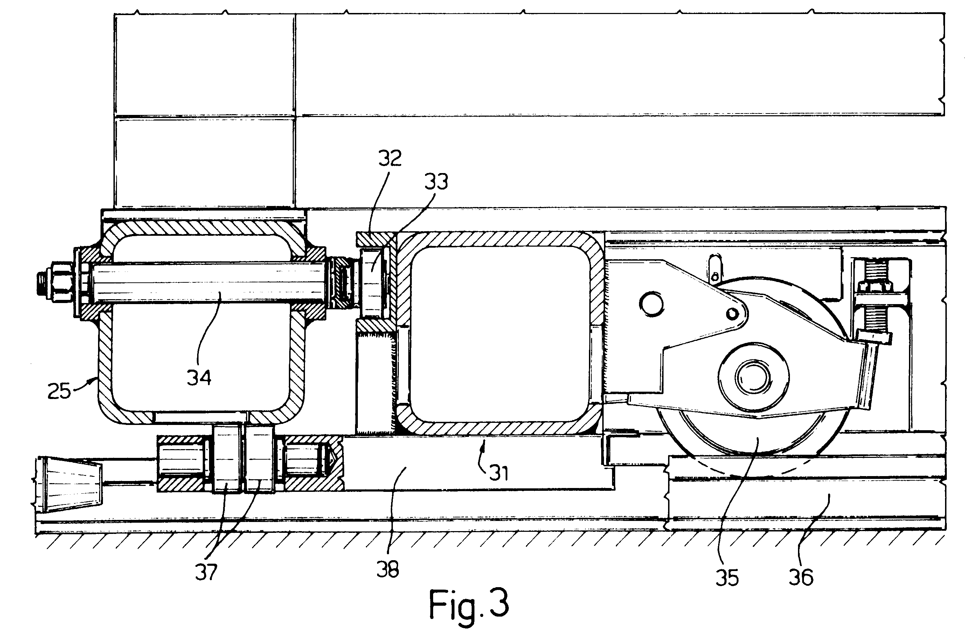

As is clearly seen from Figure 3, each cross-member 31 has a guide 32 for the running of a set of rollers 33 fixed to the corresponding cross-member 25 of the other pair; thus the complex constituted by the two cross-members 25, the longitudinal members 26 fixed thereto, the uprights 27, the shafts 28 and the rollers 29 is movable relative to the frame 30 in a direction perpendicular to that of the horizontal axis a about which the frames 6 pivot so as to enable each of these frames to be moved towards and away from a corresponding bed 4.

As is seen clearly in Figure 3, each of the cross-members 25 and 31 is conveniently constituted by a hollow profiled section of substantially square section. Moreover each cross-member 25 is traversed by pins 34 on which the rollers 33 are rotatable while wheels 35 (Figure 3) are fixed to each cross-member 31 towards the inside of the structure 5 and run on guides 36 so as to enable the frame 30 to move in a direction parallel to that of the horizontal pivot axis a of the frames 6.

Furthermore each cross-member 31 has support rollers 37 for supporting the cross-member 25; these rollers are conveniently rotatable on tongues 38 (Figures 2 and 3) projecting laterally from beneath each cross-member 31 as is clearly seen in Figure 3. Conveniently one tongue 38 with respective rollers 37 is provided at each end of each cross-member 31. With this constructional arrangement, each cross-member 25 rests on the rollers 37 when the horizontal support structure 5 carries out the step of moving towards the pack 3.

Each pivotable frame 6 comprises essentially a beam 40 (Figures 1 and Figure 2) which is located with its length parallel to the pivot axis a of each frame 6 together with a plurality of arms 41 extending perpendicular to the beam itself and to each of which are fixed the suction elements 7. The end 16 of each pivotable lever 14 is pivotally connected to a respective fork 42 projecting from the lower part of the beam 40; furthermore the end 10 of each of the rods 8 is pivotally connected to a further corresponding fork 43 located on the upper part of the beam 40. Each of the pivotable frames 6 is supported by two levers 14 as is clearly seen in Figure 2 and is connected to the support structure by a single rod 8.

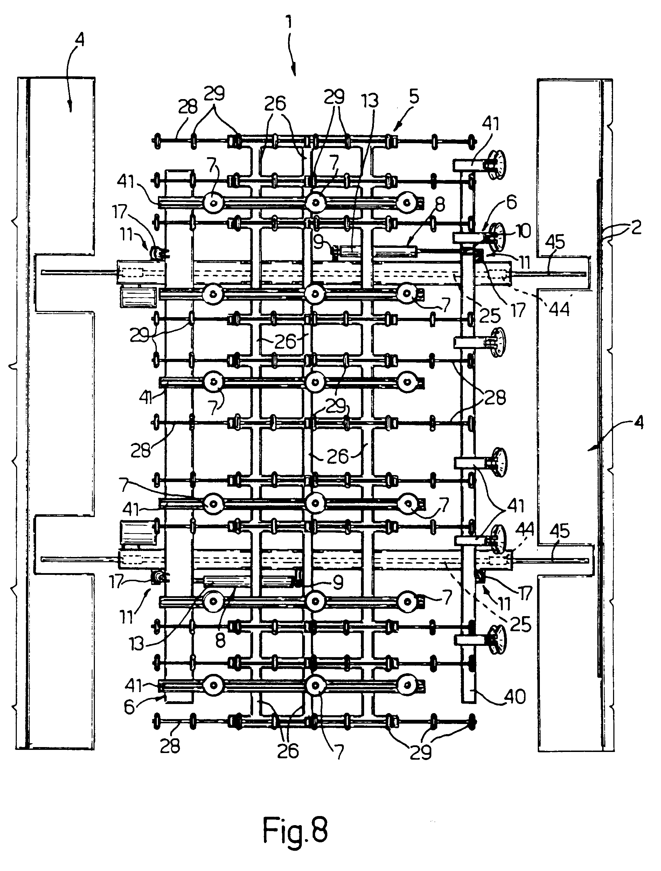

The embodiment of the machine of Figure 8 differs from that of the preceding figures only in that, firstly, it lacks the frame 30; in this case the cross-members 25 of the support structure 5 have wheels 44 which rest on corresponding guides 45 so as to enable the structure itself to move towards or away from one of the beds 4.

The operation of the machine of the invention is as follows.

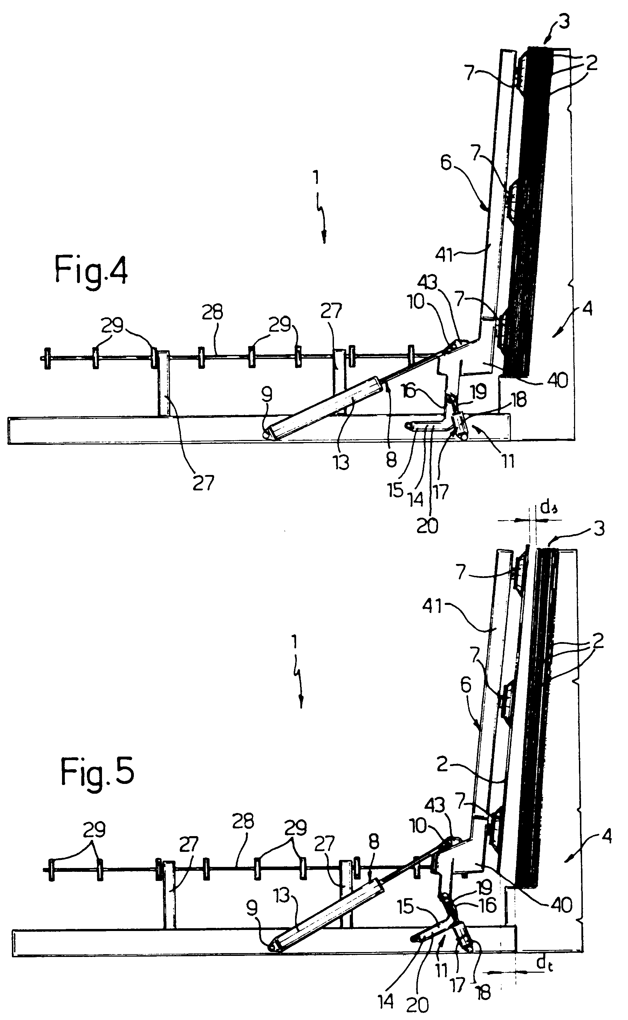

It will be supposed that the operation is started from the configuration shown in Figure 4 in which, for simplicity, only one of the two pivotable frames 6 is shown; in the said configuration this frame is pivoted so that the its arms 41 are substantially vertical and parallel to the sheets 2 in the pack 3; in this configuration it is supposed that the complex comprising the two cross-members 25 and the parts associated therewith have been moved towards the bed 4 until the suction elements 7 have been brought into contact with the outer surface of the first sheet in the pack 3.

At this point the hydraulic cylinders 17 may be actuated: each of these pivots the respective pivotable lever 14 about its pivot pin on the cross-member 25 in an anticlockwise sense as seen in Figure 5. Thus the trace of the pivot axis a of the frame 6 travels a path in the form of a circular arc, causing the displacement of the axis itself both upwardly and inwardly of the structure, as is clearly shown in Figure 5; since, during this movement, the length of the respective rod 8 is kept unchanged, the frame itself is displaced in such a manner that the arms 41 are not maintained parallel to the surface of the sheet 2 which is beneath that which has been grasped by the suction elements 7 but is pivoted relative thereto. As a result of this movement, the sheet 2 which was contacted by the suction elements 7 is detached from the underlying sheet: in particular, the distance dₜ between the sheet taken up and that immediately underlying it measured in correspondence with the lower end of the frame 6 is greater than the corresponding distance dₛ measured at the upper end of the frame. Consequently the sheet contacted by the suction elements 7 is detached properly from the underlying one without the production of any adhesion between these two sheets.

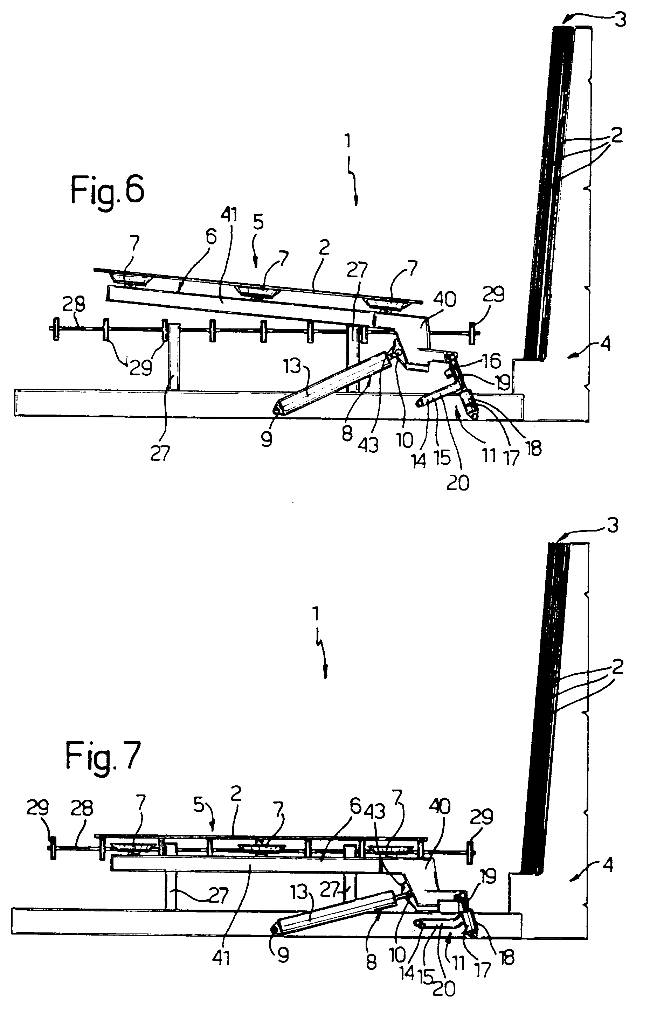

Subsequently the hydraulic cylinder 13 is activated so as to shorten of the rod 8 and hence pivot the frame 6 about the axis a; hence, as will be clearly seen from Figure 6, the sheet 2 which is fixed to the suction elements 7 is tipped over and brought into a substantially horizontal configuration in which it is not yet in contact with the rollers 29 of the support structure 5; the hydraulic cylinders 17 are then again actuated as shown in Figure 7 so as to pivot the pivotable levers 14 in the clockwise sense as seen in the drawing so as to bring the sheet 2 to rest on the rollers 28; as the movement of the frame 6 continues, the suction elements 7 detach from the sheet itself which remains supported solely by the rollers 29.

The sheet is then moved in any convenient manner by these rollers on to other apparatus for carrying out work on the sheet itself.

It will thus be clear that, with the machine of the invention, perfect detachment of each sheet 2 from the underlying one is achieved by the specific movement which is imparted to each pivotable frame 6. This favourable result is achieved by the fact that, in the first part of the movement of the sheet, a small rotation is also imparted which causes the lower part of the sheet to detach through a distance dₜ which is much greater than that of the upper part (dₛ).

Furthermore, even in the step in which the sheet is deposited on the rollers 37 of the support structure 5, as shown in Figure 7, no damage is caused to the sheet because the sheet does not slide relative to the rollers; indeed, in this step, the sheet is rested on the rollers with a component of movement which is substantially vertical.

The machine of the invention is also structurally very simple and compact: it is also extremely reliable because of its simple structure and the form of its constituent parts and members.

During the movement in which each frame 6 is brought closer to the pack of sheets 3, the cross-members 25 move on the cross-members 31 being guided for this movement by the complex constituted by the rollers 33 and their guides 32; the relative movement of the cross-members 25 and 31 may be quite considerable, thus allowing a long travel to bring the frame 6 close to the pack 3 and hence the use of very thick packs, this favourable result also being due to the presence of the rollers 37 carried by the tongues 38: in fact, when the cross-members 25 are in their outer travel-limit position, they rest on the rollers 37 which support the ends of the cross-members themselves, achieving secure support and precise guiding.

The machine of the invention may be constructed as shown in Figure 1 in which its support structure is movable in two perpendicular directions or as shown in Figure 8 in which the structure of Figure 8 is movable solely in the direction perpendicular to that of the axis a defined above. To change from the first to the second structure it suffices to eliminate the frame 30 and to provide the cross-members 25 with the wheels 41 (Figure 8) thus facilitating the production and giving the machine of Figure 8 an unlimited pack depth.

Moreover it will be clear that the embodiments of the present invention described above may be modified and varied without thereby departing from the scope of the invention, as defined in the claims.

## Claims

1. A glass-sheet loading and tipping machine for taking sheets of glass (2) in succession from a pack (3) of superposed sheets disposed in substantially vertical planes on a bed (4) and for transferring and tipping each of the sheets over onto a substantially horizontal support structure (5), the machine including essentially at least one frame (6) which is pivotable about a horizontal axis (a) parallel to the sheets in the pack and which has suction elements (7) adapted to be brought into contact with a surface of the sheets, the frame (6) being fixed to the support structure (5) by at least one extensible rod (8) having a first end (9) and a second end (10) pivotally connected to the structure (5) and to the pivotable frame (6) respectively and the extensible rod (8) including a first hydraulic cylinder (13) for varying the length of the rod itself to bring the pivotable frame (6) from a first position in which it is substantially vertical and in which the suction elements (7) are in contact with the said surface of the sheets (2), to a second position in which the frame (6) is substantially parallel to the substantially horizontal support structure, characterised in that it includes means (11) for displacing the horizontal axis (a) of the pivotable frame (6) substantially upwardly and inwardly of the support structure (5) so that, during this displacement with the length of the rod (8) being kept constant, the frame (6) moves away from the pack (4) while not being kept parallel to the pack itself so that the distance (dₜ) between the lower part of the frame and the pack of sheets becomes greater than the distance (dₛ) between the upper part of the frame and the pack of sheets.

2. A machine according to Claim 1, characterised in that the means (11) for displacing the horizontal axis (a) of the frame (6) upwardly and inwardly of the support structure (5) comprise at least one lever (14) pivotable in a vertical plane and having one end (15) pivoted on the support structure (5) and the other end (16) pivoted on the said axis.

3. A machine according to Claim 2, characterised in that the pivotable lever (14) is driven by a second hydraulic cylinder (17) of which the fixed part (18) and the movable part (19) are pivoted one on the support structure (5) and the other on the axis (a).

4. A machine according to one of Claims 2 or 3, characterised in that the pivotable lever (14) has two arms (21, 22) substantially perpendicular to each other.

5. A machine according to any one of the preceding claims, characterised in that it includes activator means for controlling the first (13) and the second (17) hydraulic cylinders to operate in succession starting from the said first position in which the pivotable frame (6) is vertical and the suction elements (7) are in contact with the surface of the sheet (2), the activator means activating the second hydraulic cylinder (17) first to pivot the pivotable lever (14) and displace the horizontal axis (a) upwardly and inwardly of the support structure so as to cause the detachment of that sheet (2), the surface of which is contacted by the suction elements (7), from the underlying sheet in the pack (3) and the activator means then activating the first hydraulic cylinder (13) to reduce the length of the rod (8) and pivot the pivotable frame (6) into the second position.

6. A machine according to any one of the preceding claims, characterised in that the support structure (5) comprises a pair of first cross-members (25) the axes of which are substantially perpendicular to the horizontal axis (a) the cross-members (25) being interconnected by a plurality of longitudinal members (26) perpendicular to the cross-members themselves, each of the longitudinal members having uprights (27) for supporting a plurality of shafts (28) rotatable on the uprights themselves and to which rollers (29) are fixed to provide support for the sheets.

7. A machine according to Claim 6 including claim 2, characterised in that one end (15) of one of the pivotable levers (14) and one end (9) of one of the extensible rods (8) are pivotally connected to one of the cross-members (25).

8. A machine according to any one of the preceding claims, characterised in that the support structure (5) further includes a frame (30) movable relative to the bed (4) in the direction of the horizontal axis (a), the movable frame (30) comprising at least one pair of second cross-members (31) parallel to the first pair of cross-members (25) and located so that one cross-member (25) of the first pair lies substantially alongside and outside the corresponding cross-member (31) of the second pair, each of the cross-members of the second pair (31) having a guide (32) for the running of a set of rollers (33) fixed to the corresponding cross-member (25) of the first pair, such that the complex constituted by the two cross-members (25) of the first pair, the longitudinal members (26), the shafts (28) and the rollers (29) is supported by the movable frame (30) and is movable relative to the frame itself in a direction perpendicular to the horizontal axis (a) so as to move the pivotable frame (6) closer to or away from the bed (4).

9. A machine according to any one of Claims 6 to 8, characterised in that each of the cross-members of the first pair (25) and of the second pair (31) is constituted by a hollow profiled section having a substantially square section, each cross-member (25) of the first pair being traversed by pins (34) to which the rollers (33) are fixed and each cross-member (31) of the second pair having wheels (35) fixed thereto to enable the movable frame (30) to move in a direction parallel to the horizontal axis (a).

10. A machine according to any one of Claims 7 to 10, characterised in that each of the cross-members (31) of the second pair has support rollers (37) for supporting a corresponding cross-member (25) of the first pair, the support rollers (37) being rotatable on tongues (38) projecting laterally from each cross-member (31) of the second pair and being located beneath the corresponding cross-member (25) of the first pair such that each cross-member (25) of the first pair rests on the rollers (37) in the step in which it is brought close to the pack (3).

11. A machine according to claim 2, characterised in that each of the pivotable frames (6) comprises essentially a beam (40) extending parallel to the pivot axis (a) and a plurality of arms (41) perpendicular to the beam (40) and to each of which are fixed the suction elements (7), each of the pivotable levers (14) being pivotally connected to a corresponding fork (42) projecting from the beam (40) and each of the extensible rods (8) being pivotally connected to another corresponding fork (43) projecting from the beam (40).

12. A machine according to claim 2, characterised in that it includes two of the pivotable frames (6) each of which is supported by two of the pivotable levers (14) each of which is pivoted on a cross-member (25) of the first series.

13. A machine according to Claim 6, characterised in that each of the cross-members (25) has wheels for resting on corresponding guides to enable the movement of the support structure (5) in the direction of the longitudinal axis of the cross-members themselves to move the structure closer to or away from one of the beds.

## Patentansprüche

1. Glasscheibenlade- und Kippmaschine zum aufeinanderfolgenden Abnehmen von Glasscheiben (2) von einem Stapel (3) übereinander geschichteter Glasscheiben, die im wesentlichen in vertikalen Ebenen in einem Gestell (4) angeordnet sind, und zum Transport und Kippen jeder der Glasscheiben auf eine im wesentlichen horizontale Tragkonstruktion (5), wobei die Maschine als wesentlichen Bestandteil über mindestens einen Rahmen (6) verfügt, der um eine horizontale, zu den Glasscheiben des Stapels parallele Achse (a) schwenkbar ist und der Ansaugelemente (7) aufweist, die mit der Oberfläche der Scheiben in Kontakt bringbar sind, wobei der Rahmen (6) an der Tragkonstruktion (5) durch mindestens eine ausfahrbare Stange (8) befestigt ist, die ein erstes Ende (9) und ein zweites Ende (10) aufweist, die jeweils schwenkbar an der Konstruktion (5) und an dem schwenkbaren Rahmen (6) befestigt sind, wobei die ausfahrbare Stange (8) über einen ersten hydraulischen Zylinder (13) zum Variieren der Länge der Stange selbst verfügt, um den schwenkbaren Rahmen (6) von einer ersten Position, in der dieser im wesentlichen vertikal ausgerichtet ist und in der sich die Ansaugelemente (7) in Kontakt mit der Oberfläche der Glasscheibe (2) befinden, in eine zweiten Position zu überführen, in der der Rahmen (6) im wesentlichen parallel zu der im wesentlichen horizontalen Tragkonstruktion ausgerichtet ist, **dadurch gekennzeichnet**, daß sie Vorrichtungen (11) aufweist, um die horizontale Achse (a) des schwenkbaren Rahmens (6) im wesentlichen nach oben und zum Inneren der Tragkonstruktion (5) hin zu versetzen, so daß sich während der Versetzung bei konstant gehaltener Länge der Stange (8) der Rahmen (6) von dem Stapel (4) entfernt, und dabei nicht parallel zum Stapel gehalten wird, sondern der Abstand (dₜ) zwischen dem unteren Teil des Rahmens und dem Stapel der Scheiben größer wird als der Abstand (dₛ) zwischen dem oberen Teil des Rahmens und dem Stapel der Scheiben.

2. Maschine nach Anspruch 1, dadurch gekennzeichnet, daß die Vorrichtungen (11) zum Versetzen der horizontalen Achse (a) des Rahmens (6) im wesentlichen nach oben und zum Inneren der Tragkonstruktion (5) hin mindestens einen in einer vertikalen Ebene schwenkbaren Hebel (14) aufweist, der mit einem Ende (15) schwenkbar an der Tragkonstruktion (5) und mit dem anderen Ende (16) schwenkbar an der Achse befestigt ist.

3. Maschine nach Anspruch 2, dadurch gekennzeichnet, daß der schwenkbare Hebel (14) durch einen zweiten hydraulischen Zylinder (17) antreibbar ist, dessen feststehender Teil (18) und dessen beweglicher Teil (19) einerseits schwenkbar an der Tragkonstruktion (5) und andererseits schwenkbar an der Achse (a) befestigt ist.

4. Maschine nach einem der Ansprüche 2 oder 3, dadurch gekennzeichnet, daß der schwenkbare Hebel (14) zwei Arme (21, 22) aufweist, die im wesentlichen rechtwinklig zueinander ausgerichtet sind.

5. Maschine nach einem der vorangehenden Ansprüche, dadurch gekennzeichnet, daß sie Betätigungsvorrichtungen zur Kontrolle des ersten (13) und zweiten (17) hydraulischen Zylinders aufweist, um nacheinander betreibbar zu sein, nämlich beginnend mit der ersten Position, in der der schwenkbare Rahmen (6) eine vertikale Stellung einnimmt und in der die Ansaugelemente (7) in Kontakt mit der Oberfläche der Scheiben (2) sind, wonach dann die Betätigungsvorrichtungen zunächst den zweiten hydraulischen Zylinder (17) aktivieren, um den schwenkbaren Hebel (14) zuerst zu schwenken und die horizontale Achse (a) nach oben und nach innen zur Tragkonstruktion hin zu versetzen, um so die Loslösung derjenigen Scheibe (2) von den darunter liegenden Scheiben im Stapel (3) zu bewirken, deren Oberfläche mit den Ansaugelementen (7) in Kontakt steht, und die Betätigungsvorrichtungen dann den ersten hydraulischen Zylinder (13) aktivieren, um die Länge der Stange (8) zu reduzieren und den schwenkbaren Rahmen (6) in die zweite Position zu schwenken.

6. Maschine nach einem der vorangehenden Ansprüche, dadurch gekennzeichnet, daß die Tragkonstruktion (5) ein Paar erster Kreuzteile (25) aufweist, deren Achsen im wesentlichen rechtwinklig zur horizontalen Achse (a) verlaufen, wobei die Kreuzteile (25) durch eine Vielzahl von Längsteilen (26) miteinander verbunden sind, die wiederum rechtwinklig zu den Kreuzteilen verlaufen, wobei jedes der Längsteile über Ständer (27) zum Halten einer Vielzahl von drehbar an den Ständern angebrachten Wellen (28) verfügt, an denen Rollen (29) befestigt sind, um den Scheiben als Stütze zu dienen.

7. Maschine nach Anspruch 6 einschließlich Anspruch 2, dadurch gekennzeichnet, daß ein Ende (15) eines der schwenkbaren Hebel (14) und ein Ende (9) einer der ausfahrbaren Stangen (8) schwenkbar an einem der Kreuzteile (25) befestigt sind.

8. Maschine nach einem der vorherigen Ansprüche, dadurch gekennzeichnet, daß die Tragkonstruktion (5) einen Rahmen (30) aufweist, der relativ zu dem Gestell (4) in Richtung der horizontalen Achse (a) beweglich ist, wobei der bewegliche Rahmen (30) mindestens ein Paar zweiter Kreuzteile (31) aufweist, das parallel zu dem ersten Paar von Kreuzteilen (25) ausgerichtet und so angeordnet ist, daß ein Kreuzteil (25) des ersten Paares im wesentlichen längsseits und außerhalb des zugeordneten Kreuzteils (31) des zweiten Paares liegt, wobei jedes der Kreuzteile des zweiten Paares (31) eine Führung (32) für den Lauf eines Satzes von Rollen (33) aufweist, die derart an dem zugeordnetem Kreuzteil (25) des ersten Paares befestigt sind, daß sich der aus den beiden Kreuzteilen (25) des ersten Paares, den Längsteilen (26), den Wellen (28) und den Rollen (29) gebildete Komplex von dem bewegbaren Rahmen (30) getragen wird und relativ zu dem Rahmen selbst in einer Richtung rechtwinklig zu der horizontalen Achse (a) beweglich ist, so daß der schwenkbare Rahmen (6) näher zu dem Gestell (4) hinbewegbar oder weiter vom diesem entfernbar ist.

9. Maschine nach einem der Ansprüche 6 bis 8, dadurch gekennzeichnet, daß jedes der Kreuzteile des ersten Paares (25) und des zweiten Paares (31) von einem Hohlprofilabschnitt mit im wesentlichen quadratischem Querschnitt gebildet wird, wobei jedes der Kreuzteile (25) des ersten Paares von Stiften (34) durchquert wird, an denen Rollen (33) befestigt sind, und jedes der Kreuzteile (31) des zweiten Paares an ihm befestigte Räder (35) aufweist, um dem beweglichen Rahmen (30) eine Bewegung in einer parallel zur horizontalen Achse (a) liegenden Richtung zu gestatten.

10. Maschine nach einem der Ansprüche 7 bis 10, dadurch gekennzeichnet, daß jedes der Kreuzteile (31) des zweiten Paares Stützrollen (37) aufweist, um ein zugeordnetes Kreuzteil (25) des ersten Paares zu stützen, wobei die Stützrollen (37) drehbar auf Zungen (38) angebracht sind, die seitlich aus jedem Kreuzteil (31) des zweiten Paares vorstehen und die unterhalb des zugeordneten Kreuzteils (25) des ersten Paares angeordnet sind, so daß jedes Kreuzteil (25) des ersten Paares bei dem Arbeitsschritt an den Rollen (37) verbleibt, bei dem es dem Stapel (3) genähert wird.

11. Maschine nach Anspruch 2, dadurch gekennzeichnet, daß jeder der schwenkbaren Rahmen (6) einen sich zur Schwenkachse (a) parallel erstreckenden Trägerbalken (40) und eine Vielzahl von zu dem Trägerbalken (40) rechtwinkligen Armen (41) aufweist, an denen jeweils die Ansaugelemente (7) befestigt sind, wobei jeder der schwenkbaren Hebel (14) schwenkbar an einer zugeordneten, von dem Trägerbalken (40) hervorspringenden Gabel (42) befestigt ist, und jede der ausfahrbaren Stangen (8) drehbar an einer anderen zugeordneten, von dem Trägerbalken (40) vorstehenden Gabel (43) befestigt ist.

12. Maschine nach Anspruch 2, dadurch gekennzeichnet, daß sie zwei der schwenkbaren Rahmen (6) aufweist, von denen jeder von zwei schwenkbaren Hebeln (14) gehalten wird, von denen jeder schwenkbar an einem Kreuzteil (25) der ersten Reihe angebracht ist.

13. Maschine nach Anspruch 6, dadurch gekennzeichnet, daß jedes der Kreuzteile (25) Radrollen aufweist, um auf einer zugeordneten Führung zu verbleiben, um so eine Bewegung der Tragkonstruktion (5) in die Richtung der Längsachse der Kreuzteile selbst zu gestatten, damit die Konstruktion näher zu einem der Gestelle hinbewegbar oder von diesem entfernbar ist.

## Revendications

1. Machine de chargement et de basculement de feuilles de verre, destinée à prélever successivement des feuilles de verre (2) dans une série (3) de feuilles placées l'une contre l'autre et disposées dans des plans sensiblement verticaux sur un socle (4), et à transférer et à basculer chacune des feuilles vers une structure de support (5) sensiblement horizontale, la machine comprenant essentiellement au moins un cadre (6) susceptible de pivoter autour d'un axe horizontal (a) parallèle aux feuilles de la série et qui présente des éléments aspirateurs (7) aptes à être amenés au contact d'une surface des feuilles, le cadre (6) étant fixé sur la structure de support (5) par au moins une tige extensible (8) qui présente une première extrémité (9) et une seconde extrémité (10) raccordées en pivotement respectivement sur la structure (5) et sur le cadre pivotant (6), la tige extensible (8) comprenant un premier vérin hydraulique (13) pour faire varier la longueur de la tige elle-même afin d'amener le cadre pivotant (6) d'une première position, dans laquelle il est sensiblement vertical et dans laquelle les éléments aspirateurs (7) sont en contact avec ladite surface des feuilles (2), à une seconde position, dans laquelle le cadre (6) est sensiblement parallèle à la structure de support sensiblement horizontale, caractérisée par le fait qu'elle comprend des moyens (11) pour déplacer l'axe horizontal (a) du cadre pivotant (6) globalement vers le haut et vers l'intérieur de la structure de support (5), de sorte que, pendant ce déplacement, la longueur de la tige (8) étant gardée constante, le cadre (6) s'écarte de la série (3) sans rester parallèle à cette série, de sorte que la distance (dₜ) entre la partie inférieure du cadre et la série de feuilles devient supérieure à la distance (dₛ) entre la partie supérieure du cadre et la série de feuilles.

2. Machine selon la revendication 1, caractérisée par le fait que les moyens (11) pour déplacer l'axe horizontal (a) du cadre (6) vers le haut et vers l'intérieur de la structure de support (5) comprennent au moins un levier (14) susceptible de pivoter dans un plan vertical, et dont une première extrémité (15) pivote sur la structure de support (5) et l'autre extrémité (16) pivote sur ledit axe.

3. Machine selon la revendication 2, caractérisée par le fait que le levier pivotant (14) est entraîné par un second vérin hydraulique (17) dont la partie fixe (18) et la partie mobile (19) pivotent l'une sur la structure de support (5) et l'autre sur l'axe (a).

4. Machine selon l'une des revendications 2 et 3, caractérisée par le fait que le levier pivotant (14) présente deux bras (21, 22) sensiblement perpendiculaires entre eux.

5. Machine selon l'une quelconque des revendications précédentes, caractérisée par le fait qu'elle comprend des moyens d'actionnement pour commander le fonctionnement successif des premier (13) et - second (17) vérins hydrauliques, à partir de ladite première position, dans laquelle le cadre pivotant (6) est vertical et les éléments aspirateurs (7) sont en contact avec la surface de la feuille (2), les moyens d'actionnement actionnant d'abord le second vérin hydraulique (17) afin de faire pivoter le levier pivotant (14) et de déplacer l'axe horizontal (a) vers le haut et vers l'intérieur de la structure de support, en vue de provoquer le détachement de la feuille (2), dont la surface est en contact avec les éléments aspirateurs (7), de la feuille sous-jacente dans la série (3), et les moyens d'actionnement actionnant ensuite le premier vérin hydraulique (13) afin de réduire la longueur de la tige (8) et de faire pivoter le cadre pivotant (6) vers la seconde position.

6. Machine selon l'une quelconque des revendications précédentes, caractérisée par le fait que la structure de support (5) comprend une paire de premiers éléments transversaux (25) dont les axes sont sensiblement perpendiculaires à l'axe horizontal (a), les éléments transversaux (25) étant raccordés entre eux par une pluralité d'éléments longitudinaux (26) perpendiculaires aux éléments transversaux, chacun des éléments longitudinaux présentant des montants (27) qui supportent une pluralité d'arbres (28) susceptibles de tourner sur les montants et auxquels sont fixés des rouleaux (29) qui servent de support aux feuilles.

7. Machine selon la revendication 6 incluant la revendication 2, caractérisée par le fait qu'une première extrémité (15) d'un des leviers pivotants (14) et une première extrémité (9) d'une des tiges extensibles (8) sont raccordées en pivotement a l'un des éléments transversaux (25).

8. Machine selon l'une quelconque des revendications précédentes, caractérisée par le fait que la structure de support (5) comprend en outre un cadre (30) susceptible de se déplacer par rapport au socle (4) dans la direction de l'axe horizontal (a), le cadre mobile (30) comprenant au moins une paire de seconds éléments transversaux (31), parallèle à la première paire d'éléments transversaux (25), et placée de sorte qu'un élément transversal (25) de la première paire se trouve globalement le long et à l'extérieur de l'élément transversal (31) correspondant de la seconde paire, chacun des éléments transversaux de la seconde paire (31) présentant un guide (32) destiné au roulement d'un jeu de rouleaux (33) fixés à l'élément transversal (25) correspondant de la première paire, de sorte que l'ensemble constitué par les deux éléments transversaux (25) de la première paire, les éléments longitudinaux (26), les arbres (28) et les rouleaux (29) est supporté par le cadre mobile (30) et est susceptible de se déplacer par rapport au cadre lui-même dans une direction perpendiculaire à l'axe horizontal (a), afin de rapprocher ou d'écarter le cadre pivotant (6) du socle (4).

9. Machine selon l'une quelconque des revendications 6 à 8, caractérisée par le fait que chacun des éléments transversaux de la première paire (25) et de la seconde paire (31) est constitué par un profilé creux à section sensiblement carrée, chaque élément transversal (25) de la première paire étant traversé par des axes (34) auxquels sont fixés les rouleaux (33), et chaque élément transversal (31) de la seconde paire présentant des roues (35) fixées sur lui qui permettent au cadre mobile (30) de se déplacer dans une direction parallèle à l'axe horizontal (a).

10. Machine selon l'une quelconque des revendications 7 à 10, caractérisée par le fait que chacun des éléments transversaux (31) de la seconde paire présente des rouleaux de support (37) qui supportent un élément transversal (25) correspondant de la première paire, les rouleaux de support (37) étant susceptibles de tourner sur des languettes (38) qui font saillie latéralement sur chaque élément transversal (31) de la seconde paire et sont placées sous l'élément transversal (25) correspondant de la première paire, de sorte que chaque élément transversal (25) de la première paire repose sur les rouleaux (37) pendant l'étape au cours de laquelle il est amené à proximité de la série (3).

11. Machine selon la revendication 2, caractérisée par le fait que chacun des cadres pivotants (6) comprend essentiellement un longeron (40), qui s'étend parallèlement à l'axe de pivotement (a), et une pluralité de bras (41) perpendiculaires au longeron (40) et à chacun desquels sont fixés les éléments aspirateurs (7), chacun des leviers pivotants (14) étant raccordé en pivotement à une fourchette (42) correspondante qui fait saillie sur le longeron (40), et chacune des tiges extensibles (8) étant raccordée en pivotement à une autre fourchette (43) correspondante qui fait saillie sur le longeron (40).

12. Machine selon la revendication 2, caractérisée par le fait qu'elle comprend deux cadres pivotants (6), qui sont chacun supportés par deux leviers pivotants (14) qui pivotent chacun sur un élément transversal (25) de la première série.

13. Machine selon la revendication 6, caractérisée par le fait que chacun des éléments transversaux (25) présente des roues qui reposent sur des guides correspondants en vue de permettre le mouvement de la structure de support (5) dans la direction de l'axe longitudinal des éléments transversaux pour rapprocher ou écarter la structure de l'un des socles.
